(19) Europäisches Patentamt
European Patent Office
Office européen des brevets

(11) EP 3 083 810 B1

(12) FASCICULE DE BREVET EUROPEEN

(45) Date de publication et mention de la délivrance du brevet:
**20.03.2019 Bulletin 2019/12**

(21) Numéro de dépôt: **14805954.6**

(22) Date de dépôt: **03.12.2014**

(51) Int Cl.:
***C08L 9/06*** (2006.01) ***B60C 1/00*** (2006.01)
***B60C 11/13*** (2006.01)

(86) Numéro de dépôt international:
**PCT/EP2014/076448**

(87) Numéro de publication internationale:
**WO 2015/090974 (25.06.2015 Gazette 2015/25)**

(54) **PNEU DONT LA BANDE DE ROULEMENT COMPORTE DES ELEMENTS DE SCULPTURE AVEC DES PAROIS LATERALES RIGIDES COMPORTANT UN CAOUTCHOUC THERMO-EXPANSIBLE A L'ETAT CRU, OU CAOUTCHOUC MOUSSE A L'ETAT CUIT**

REIFEN MIT LAUFFLÄCHE MIT PROFILMUSTER MIT STARREN SEITENWÄNDEN MIT EINEM IM UNGEHÄRTETEN ZUSTAND WÄRMEEXPANDIERBAREN GUMMI ODER SCHAUMGUMMI IN GEHÄRTETEM ZUSTAND

TIRE, THE TREAD OF WHICH COMPRISES TREAD PATTERN FEATURES WITH RIGID SIDEWALLS COMPRISING A RUBBER THAT IS HEAT-EXPANDABLE IN THE UNCURED STATE OR FOAM RUBBER IN THE CURED STATE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **19.12.2013 FR 1363021**

(43) Date de publication de la demande:
**26.10.2016 Bulletin 2016/43**

(73) Titulaire: **Compagnie Générale des Etablissements Michelin**
**63000 Clermont-Ferrand (FR)**

(72) Inventeurs:
- **PAGANO, Salvatore**
  **F-63040 Clermont-ferrand Cedex 9 (FR)**
- **OCHIAI, Chika**
  **Ota-ku**
  **Tokyo 143-0014 (JP)**

(74) Mandataire: **Regimbeau**
**20, rue de Chazelles**
**75847 Paris Cedex 17 (FR)**

(56) Documents cités:
**WO-A1-2005/044593 WO-A1-2012/164002**
**WO-A1-2013/087878**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 083 810 B1

## Description

### 1. DOMAINE DE L'INVENTION

L'invention est relative aux compositions de caoutchouc utilisables comme bandes de roulement de pneus pour véhicules, en particulier de pneus « hiver » aptes à rouler sur des sols recouverts de neige ou de glace sans être pourvus de clous (aussi appelés pneus *"studless"*).

Elle est plus particulièrement relative aux pneus dont la bande de roulement présente une formulation spécifiquement adaptée non seulement à un roulage sur neige, mais aussi à un roulage sous conditions dites de « glace fondante » rencontrées dans un domaine de température compris entre -5°C et 0°C, domaine dans lequel de manière connue, la pression des pneus au passage d'un véhicule provoque une fusion superficielle de la glace qui se recouvre d'un mince film d'eau nuisible à l'adhérence de ces pneus.

### 2. ETAT DE LA TECHNIQUE

Pour obtenir des performances satisfaisantes en roulage, notamment sur chaussée mouillée, enneigée voire verglacée, il est bien connu de pourvoir les bandes de roulement de pneus de telle ou telle sculpture appropriée, formée par des éléments de sculpture séparés les uns des autres par des « découpures » (rainures de largeur moyenne égale ou supérieure à 2 mm et/ou incisions de largeur moyenne inférieure à 2 mm), ces découpures étant obtenues par exemple par moulage. Ces éléments de sculpture comprennent une face de contact destinée à venir en contact avec la chaussée pendant le roulage et des parois latérales délimitant également les découpures ; l'intersection de chaque paroi latérale avec la face de contact forme une arête facilitant le contact du pneu avec la chaussée.

Par éléments de sculpture, on rappellera notamment ici que l'on distingue habituellement des éléments ne faisant pas le tour complet du pneumatique (appelés « blocs ») et des éléments faisant le tour complet (appelés « nervures »). Par ailleurs, les éléments de sculpture peuvent comporter une ou plusieurs incisions fines formant des arêtes supplémentaires.

Ces généralités étant rappelées, il est bien connu que la formulation des mélanges caoutchouteux (compositions de caoutchouc) composant la bande de roulement, en particulier pour les parties formant les arêtes ci-dessus, a une incidence notable sur les performances d'adhérence du pneu sur une chaussée, en particulier humide, enneigée, ou glacée.

Ainsi, la demande de brevet WO 2013/087878, déposée par les demanderesses, a décrit récemment un pneu du type hiver particulièrement bien adapté à un roulage sur route enneigée, dont la bande de roulement comporte :

- une pluralité d'éléments de sculpture formés d'un premier matériau caoutchouteux dit mélange ou matériau de base, délimités par des découpures ;
- ces éléments de sculpture comprenant une face de contact destinée à venir en contact avec la chaussée pendant le roulage du pneu, et des parois latérales formant des arêtes avec la face de contact ;
- sur tout ou partie de ces parois latérales, le matériau de base étant recouvert par une couche d'un second mélange ou matériau dit de recouvrement, différent du matériau de base, comportant au moins une composition de caoutchouc de formulation spécifique (en particulier une composition fortement chargée ayant une température de transition vitreuse élevée, ou encore une composition à très haut taux de soufre) apte à donner à la couche de recouvrement une très forte rigidité après vulcanisation du pneu, et qui placée à cet endroit de la sculpture est favorable à l'adhérence sur sol enneigé.

Des essais ultérieurs ont toutefois révélé que la bande de roulement décrite ci-dessus n'était pas optimisée pour fournir aux pneus et véhicules qui en sont équipés, de bonnes performances de roulage et d'adhérence à la fois sur un sol enneigé et verglacé, en particulier dans le deuxième cas sous des conditions de glace fondante.

### 3. BREVE DESCRIPTION DE L'INVENTION

Poursuivant leurs recherches sur la technologie ci-dessus, les demanderesses ont découvert un nouveau matériau de recouvrement avec une composition de caoutchouc à formulation spécifique à base d'un élastomère diénique comportant des unités styréniques et butadiéniques, d'un agent d'expansion couplé à un composé thermofusible, de taux élevés de charge renforçante et de résine plastifiante hydrocarbonée combinés à un très faible taux ou à l'absence même d'agent plastifiant liquide, formulation qui permet de manière inattendue d'améliorer notablement le compromis d'adhérence sur sol enneigé et d'adhérence sur glace fondante.

En conséquence, la présente invention concerne un pneu, à l'état cru ou cuit, dont la bande de roulement comporte :

- une pluralité d'éléments de sculpture (1) formés d'un premier matériau caoutchouteux dit matériau de base (MB), délimités par des découpures (3, 4) ;
- ces éléments de sculpture comprenant une face de contact (2) destinée à venir en contact avec la chaussée pendant le roulage du pneu, et au moins une paroi latérale (13, 14, 15, 16);
- sur au moins une paroi latérale de tout ou partie desdits éléments de sculpture, le matériau de base étant recouvert au moins en partie par une couche d'un second matériau caoutchouteux dit matériau de recouvrement (MR), différent du matériau de base, qui comporte au moins une composition de caoutchouc,

ce pneu étant caractérisé en ce que ladite composition de caoutchouc du matériau de recouvrement est thermo-expansible dans le pneu à l'état cru, sous forme de caoutchouc mousse dans le pneu à l'état cuit, et en ce qu'elle comporte, dans le pneu à l'état cru comme à l'état cuit, au moins :

- 50 à 100 pce d'un copolymère à base d'unités styréniques et d'unités butadiéniques, dont la température de transition vitreuse est supérieure à -40°C ;
- optionnellement, 0 à 50 pce d'un autre élastomère diénique ;
- plus de 50 pce d'une charge renforçante ;
- plus de 25 pce d'une résine plastifiante hydrocarbonée dont la température de transition vitreuse est supérieure à 20°C ;
- optionnellement, 0 à moins de 20 pce d'un agent plastifiant liquide.

L'invention concerne les pneus à l'état cru comme à l'état vulcanisé. Les pneus de l'invention sont particulièrement destinés à équiper des véhicules à moteur de type tourisme, incluant les véhicules 4x4 (à quatre roues motrices) et véhicules SUV ("*Sport Utility Vehicles*"), des véhicules deux roues (notamment motos) comme des véhicules industriels choisis en particulier parmi camionnettes et "poids-lourd" (i.e., métro, bus, engins de transport routier tels que camions, tracteurs).

L'invention ainsi que ses avantages seront aisément compris à la lumière de la description et des exemples de réalisation qui suivent, ainsi que des figures annexées relatives à ces exemples, qui représentent très schématiquement :

- une vue partielle en plan d'une sculpture à blocs (1) d'une bande de roulement d'un pneu conforme à l'invention (Fig. 1) ;
- en coupe transversale, selon la ligne de coupe II-II de la figure 1, les blocs (1) de la figure 1 constitués du premier matériau de base (MB) recouvert, pour ce qui est des parois latérales (13, 15), du second matériau de recouvrement (MR) (Fig. 2) ;
- une vue de dessus d'une éprouvette (30) de 4 blocs (31) de mélange caoutchouteux, adaptée pour conduire des tests d'adhérence sur neige ou glace (Fig. 3) ;
- une vue de côté de l'éprouvette de la figure 3 (Fig. 4).

## 4. DESCRIPTION DETAILLEE DE L'INVENTION

Dans la présente description, sauf indication expresse différente, tous les pourcentages (%) indiqués sont des % en masse. L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Selon l'invention, la bande de roulement du pneu de l'invention comporte donc (en référence aux figures 1 et 2) :

- une pluralité d'éléments de sculpture (1) formés d'un premier matériau caoutchouteux dit matériau de base (MB), délimités par des découpures (3, 4) ;
- ces éléments de sculpture comprenant une face de contact (2) destinée à venir en contact avec la chaussée pendant le roulage du pneu, et au moins une paroi latérale (13, 14, 15, 16);
- sur au moins une paroi latérale de tout ou partie desdits éléments de sculpture, le matériau de base étant recouvert, en partie ou totalement, par une couche d'un second matériau caoutchouteux dit matériau de recouvrement (MR), différent du matériau de base, comportant la composition de caoutchouc spécifique qui va être décrite en détail plus loin.

Sur la figure 1 annexée, on peut distinguer des faces de contact 2 de blocs 1 de forme rectangulaire d'une

sculpture de bande de roulement selon l'invention, lesdits blocs 1 étant délimités par des rainures d'orientation longitudinale 4 et transversale ou axiale 3. Chacun de ces blocs 1 comporte quatre parois latérales 13, 14, 15, 16 dont les intersections avec la face de contact 2 forment, respectivement, des arêtes 23, 24, 25, 26 qui jouent un rôle important en roulage et en particulier sur chaussée rendue glissante (notamment par la présence d'eau, de neige ou de glace). Chaque bloc 1 est de forme rectangulaire de largeur L1 et de longueur L2, la direction de la largeur L1 des blocs étant dans le cas décrit confondue avec la direction longitudinale de la bande de roulement ou encore la direction circonférentielle sur le pneu pourvu de sa bande de roulement.

Le premier matériau caoutchouteux ou matériau de base (MB) dont sont constitués les éléments de sculpture (1) est une composition de caoutchouc usuelle pour bande de roulement de pneu hiver adapté notamment à un roulage sur sol verglacé, de préférence comportant au moins un élastomère diénique (typiquement 50 à 100 pce d'un élastomère diénique choisi préférentiellement parmi le caoutchouc naturel, les polybutadiènes et leurs coupages), entre 50 et 150 pce d'une charge renforçante (par exemple silice et/ou noir de carbone), plus de 30 pce d'un agent plastifiant liquide (à 23°C) et un système de vulcanisation (sans compter les autres additifs habituels).

Les quatre parois latérales 13, 14, 15, 16 sont recouvertes, dans cet exemple en totalité, avec une épaisseur E1 (visible sur la figure 2) sensiblement constante (sur toute la hauteur $H_R$ de recouvrement, dans le cas présent égale à la profondeur H des rainures 3) d'une couche de matériau de recouvrement MR, différent du matériau de base MB constituant les blocs. Sur cette coupe transversale de la figure 2, réalisée selon la ligne II-II de la figure 1 et perpendiculaire aux faces de contact 2 de deux blocs 1, on distingue bien la présence en surface de la couche de matériau de recouvrement MR sur les parois latérales 13 et 15 limitant les rainures d'orientation transversale 3.

Comme déjà expliqué dans la demande WO 2013/087878 précitée, les éléments de sculpture représentés sur ces exemples schématiques comportent une couche de matériau de recouvrement MR sur toutes leurs parois latérales, mais pour obtenir une excellente adhérence sur sol enneigé ou verglacé, ce sont les parois latérales dont l'orientation est normale à la direction circonférentielle du pneu ou dont l'orientation comporte une composante normale à la direction circonférentielle qui sont préférentiellement recouvertes de la couche du matériau de recouvrement. Par exemple, le matériau de recouvrement s'étend ici, à l'état neuf, jusqu'à l'arête formée par la limite entre la face de contact et la paroi latérale de l'élément de sculpture.

L'épaisseur E1 de la couche du matériau de recouvrement MR est de préférence supérieure à 0,1 mm, plus préférentiellement supérieure à 0,2 mm, en particulier comprise entre 0,2 mm et 4,0 mm selon les applications particulières visées, notamment les types de pneus (véhicules) concernés ; par exemple, pour des véhicules du type tourisme, E1 est de préférence comprise entre 0,3 mm et 1,0 mm.

Le pneu de l'invention, à l'état cru (c'est-à-dire non vulcanisé) ou cuit (c'est-à-dire vulcanisé), est caractérisé en ce que la composition de caoutchouc du matériau de recouvrement d'une part se présente sous forme thermo-expansible dans le pneu à l'état cru et sous forme de caoutchouc mousse dans le pneu à l'état cuit, et, d'autre part, comporte au moins, dans le pneu à l'état cru comme à l'état cuit :

- 50 à 100 pce d'un (au moins un, c'est-à-dire un ou plusieurs) copolymère à base d'unités styréniques et d'unités butadiéniques, dont la Tg (température de transition vitreuse) est supérieure à -40°C ;
- optionnellement, 0 à 50 pce d'un (au moins un, c'est-à-dire un ou plusieurs) autre élastomère diénique ;
- plus de 50 pce d'une (au moins une, c'est-à-dire une ou plusieurs) charge renforçante ;
- plus de 25 pce d'une (au moins une, c'est-à-dire une ou plusieurs) résine plastifiante hydrocarbonée dont la Tg est supérieure à 20°C ;
- optionnellement, 0 à moins de 20 pce d'un (au moins un, c'est-à-dire un ou plusieurs) agent plastifiant liquide.

Les différents composants ci-dessus vont être décrits en détail ci-après.

4.1. Copolymère à base d'unités styréniques et butadiéniques ; élastomère diénique optionnel

La composition de caoutchouc du matériau de recouvrement a pour première caractéristique essentielle de comporter 50 à 100 pce d'un copolymère à base d'unités styréniques et d'unités butadiéniques, c'est-à-dire d'un copolymère d'au moins un monomère styrénique et d'au moins un monomère butadiénique. Préférentiellement, le taux de ce copolymère est compris dans un domaine de 70 à 100 pce, plus préférentiellement de 80 à 100 pce.

Par monomère butadiénique doit être entendu dans la présente description tout monomère comprenant du butadiène, non substitué comme substitué. A titre de monomère butadiénique conviennent notamment le butadiène-1,3, le 2-méthyl-1,3-butadiène, les 2,3-di(alkyle en $C_1$-$C_5$)-1,3-butadiènes tels que par exemple le 2,3-diméthyl-1,3-butadiène, le 2,3-diéthyl-1,3-butadiène, le 2-méthyl-3-éthyl-1,3-butadiène, le 2-méthyl-3-isopropyl-1,3-butadiène, un aryl-1,3-butadiène.

Par monomère styrénique doit être entendu tout monomère comprenant du styrène, non substitué comme substitué ; parmi les styrènes substitués peuvent être cités par exemple les méthylstyrènes (par exemple l'o-méthylstyrène, le m-méthylstyrène ou le p-méthylstyrène, l'alpha-méthylstyrène, l'alpha-2-diméthylstyrène, l'alpha-4-diméthylstyrène ou le diphényléthylène), le para-tertio-butylstyrène, les chlorostyrènes (par exemple l'o-chlorostyrène, le m-chlorostyrène, le p-chlorostyrène, le 2,4-dichlorostyrène, le 2,6-dichlorostyrène ou le 2,4,6-trichlorostyrène), les bromostyrènes (par exemple l'o-bromostyrène, le m-bromostyrène, le p-bromostyrène, le 2,4-dibromostyrène, le 2,6-dibromostyrène ou les 2,4,6-tribromostyrène), les fluorostyrènes (par exemple l'o-fluorostyrène, le m-fluorostyrène, le p-fluorostyrène, le 2,4-difluorostyrène, le 2,6-difluorostyrène ou les 2,4,6-trifluorostyrène) ou encore le para-hydroxy-styrène. Conviennent particulièrement le styrène, les méthylstyrènes, le para-tertiobutylstyrène, les méthoxystyrènes, les chlorostyrènes.

Ledit copolymère à base d'unités styréniques et d'unités butadiéniques peut avoir toute microstructure qui est fonction des conditions de polymérisation utilisées, notamment de la présence ou non d'un agent modifiant et/ou randomisant et des quantités d'agent modifiant et/ou randomisant employées. Il peut être par exemple à blocs, statistique, séquencé, microséquencé, et être préparé en dispersion ou en solution ; il peut être couplé et/ou étoilé ou encore fonctionnalisé avec un agent de couplage et/ou d'étoilage ou de fonctionnalisation.

De préférence, le copolymère à base d'unités styréniques et d'unités butadiéniques est choisi dans le groupe constitué par les copolymères styrène-butadiène (en abrégé SBR), les copolymères styrène-butadiène-isoprène (en abrégé SBIR) et les mélanges de tels copolymères.

Parmi les copolymères SBIR, on peut citer notamment ceux ayant une teneur en styrène comprise entre 5% et 50% en poids et plus particulièrement comprise entre 10% et 40%, une teneur en isoprène comprise entre 15% et 60% en poids et plus particulièrement entre 20% et 50%, une teneur en butadiène comprise entre 5% et 50% en poids et plus particulièrement comprise entre 20% et 40%, une teneur (% molaire) en unités -1,2 de la partie butadiénique comprise entre 4% et 85%, une teneur (% molaire) en unités trans -1,4 de la partie butadiénique comprise entre 6% et 80%, une teneur (% molaire) en unités -1,2 plus -3,4 de la partie isoprénique comprise entre 5% et 70% et une teneur (% molaire) en unités trans -1,4 de la partie isoprénique comprise entre 10% et 50%.

Plus préférentiellement, on utilise un copolymère SBR. Parmi les copolymères SBR, on peut citer notamment ceux ayant une teneur en styrène comprise entre 5% et 60% en poids et plus particulièrement entre 20% et 50%, une teneur (% molaire) en liaisons -1,2 de la partie butadiénique comprise entre 4% et 75%, une teneur (% molaire) en liaisons trans-1,4 comprise entre 10% et 80%.

La Tg de ce copolymère à base d'unités styréniques et d'unités butadiéniques est supérieure à -40°C, de préférence supérieure à -35°C, plus préférentiellement comprise entre -30°C et +30°C (en particulier comprise dans un domaine de -25°C à +25°C).

La Tg des élastomères ici décrits est mesurée de manière conventionnelle, bien connue de l'homme du métier, sur un élastomère à l'état sec (i.e., sans huile d'extension) et par DSC (par exemple selon ASTM D3418-1999).

L'homme du métier sait comment modifier la microstructure d'un copolymère à base d'unités styréniques et d'unités butadiéniques, en particulier d'un SBR, pour augmenter et ajuster sa Tg, notamment en jouant sur les teneurs en styrène, en liaisons -1,2 ou encore en liaisons trans-1,4 de la partie butadiénique. On utilise plus préférentiellement un SBR (solution ou émulsion) ayant une teneur en styrène (% molaire) qui est supérieure à 35%, plus préférentiellement comprise entre 35% et 60%, en particulier dans un domaine de 38% à 50%.

Au copolymère à base d'unités styréniques et d'unités butadiéniques ci-dessus, peut être optionnellement associé au moins un autre (dit aussi second) élastomère diénique, différent dudit copolymère (c'est-à-dire ne comportant pas à la fois des unités styréniques et butadiéniques) ; ce second élastomère diénique est présent à un taux pondéral qui est donc au plus égal à 50 pce (de préférence au plus égal à 30 pce, plus préférentiellement au plus égal à 20 pce).

Ce second élastomère diénique optionnel est préférentiellement choisi dans le groupe constitué par le caoutchouc naturel (NR), les polyisoprènes de synthèse (IR), les polybutadiènes (BR), les copolymères de butadiène (bien entendu, autres que ceux à base d'unités styréniques et d'unités butadiéniques), les copolymères d'isoprène et les mélanges de ces élastomères. De tels copolymères sont notamment choisis dans le groupe constitué par les copolymères d'isoprènebutadiène (BIR) et les copolymères d'isoprène-styrène (SIR).

Parmi ces derniers, conviennent notamment les homopolymères polybutadiène (BR) et en particulier ceux ayant une teneur (% molaire) en unités -1,2 comprise entre 4% et 80% ou ceux ayant une teneur (% molaire) en cis-1,4 supérieure à 80% ; les homopolymères polyisoprène (IR) ; les copolymères de butadiène-isoprène (BIR) et notamment ceux ayant une teneur en isoprène comprise entre 5% et 90% en poids et une Tg de - 40°C à - 80°C ; les copolymères isoprène-styrène (SIR) et notamment ceux ayant une teneur en styrène comprise entre 5% et 50% en poids et une Tg comprise entre - 25°C et - 50°C.

4.2. Charge renforçante

Toute charge connue pour ses capacités à renforcer une composition de caoutchouc est utilisable, par exemple une charge organique telle que du noir de carbone, ou une charge inorganique telle que de la silice à laquelle est associé de manière connue un agent de couplage, ou encore un coupage (mélange) de ces deux types de charge, notamment

un coupage de noir de carbone et de silice.

Une telle charge consiste préférentiellement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm.

De manière préférentielle, le taux de charge renforçante totale (en particulier de la silice ou du noir de carbone ou un mélange de silice et de noir de carbone) est compris entre 50 et 150 pce. Une teneur supérieure à 50 pce est favorable à une bonne tenue mécanique ; au-delà de 150 pce, il existe un risque de dégradation de la processabilité de la composition de caoutchouc à l'état cru. Pour ces raisons, le taux de charge renforçante totale est plus préférentiellement compris dans un domaine de 60 à 140 pce, en particulier de 70 à 130 pce.

Comme noirs de carbone conviennent par exemple tous les noirs de carbone qui sont conventionnellement utilisés dans les pneus (noirs dits de grade pneu) tels que les noirs des séries 100, 200, 300 (grades ASTM), comme par exemple les noirs N115, N134, N234, N326, N330, N339, N347, N375, ou encore, selon les applications particulières visées, les noirs de séries plus élevées (par exemple N660, N683, N772). Les noirs de carbone pourraient être par exemple déjà incorporés à l'élastomère diénique, sous la forme d'un masterbatch (voir par exemple demandes WO 97/36724 ou WO 99/16600).

Comme exemples de charges organiques autres que des noirs de carbone, on peut citer les charges organiques de polyvinyle fonctionnalisé telles que décrites dans les demandes WO-A-2006/069792, WO-A-2006/069793, WO-A-2008/003434 et WO-A-2008/003435.

Par "charge inorganique renforçante", doit être entendu ici toute charge inorganique ou minérale, quelles que soient sa couleur et son origine (naturelle ou de synthèse), encore appelée charge "blanche", charge "claire" ou même charge "non-noir" (« *non-black filler* ») par opposition au noir de carbone, capable de renforcer à elle seule, sans autre moyen qu'un agent de couplage intermédiaire, une composition de caoutchouc destinée à la fabrication de pneus, en d'autres termes apte à remplacer, dans sa fonction de renforcement, un noir de carbone conventionnel de grade pneu ; une telle charge se caractérise généralement, de manière connue, par la présence de groupes hydroxyle (-OH) à sa surface.

L'état physique sous lequel se présente la charge inorganique renforçante est indifférent, que ce soit sous forme de poudre, de microperles, de granulés, de billes ou toute autre forme densifiée appropriée. Bien entendu on entend également par charge inorganique renforçante des mélanges de différentes charges inorganiques renforçantes, en particulier de charges siliceuses et/ou alumineuses hautement dispersibles telles que décrites ci-après.

Comme charges inorganiques conviennent notamment des charges minérales du type siliceuses, en particulier de la silice ($SiO_2$), ou du type alumineuses, en particulier de l'alumine ($Al_2O_3$). La silice utilisée peut être toute silice connue de l'homme du métier, notamment toute silice précipitée ou pyrogénée de préférence pyrogénée présentant une surface BET ainsi qu'une surface spécifique CTAB toutes deux inférieures à 450 $m^2/g$, de préférence de 20 à 400 $m^2/g$. De telles silices peuvent être couvertes ou non. A titre de silice de basse surface spécifique, on citera la « Sidistar R300 » de la société Elkem Silicon Materials. A titres de silices précipitées hautement dispersibles (dites "HDS"), on citera par exemple les silices « Ultrasil 7000 » et « Ultrasil 7005 » de la société Evonik, les silices « Zeosil 1165MP », « 1135MP » et « 1115MP » de la société Rhodia, la silice « Hi-Sil EZ150G » de la société PPG, les silices « Zeopol 8715 », « 8745 » et « 8755 » de la Société Huber, les silices à haute surface spécifique telles que décrites dans la demande WO 03/16837. A titre de silices de pyrogénation, on citera par exemple « CAB-O-SIL S-17D » de la société Cabot, « HDK T40 » de la société Wacker, « Aeroperl 300/30 », « Aerosil 380 », « Aerosil 150 » ou « Aerosil 90 » de la société Evonik. De telles silices peuvent être recouvertes comme par exemple la « CAB-O-SIL TS-530 » de la société Cabot recouverte avec l'hexaméthyldisilazane ou la « CAB-O-SIL TS-622 » de la société Cabot recouverte avec le diméthyldichlorosilane.

La charge inorganique utilisée, en particulier s'il s'agit de silice, a de préférence une surface BET comprise entre 20 et 400 $m^2/g$, plus préférentiellement comprise entre 60 et 300 $m^2/g$.

Selon un mode de réalisation particulièrement préférentiel, on utilise comme charge majoritaire une charge inorganique renforçante, en particulier de la silice, à un taux compris dans un domaine de 70 à 120 pce, charge inorganique renforçante à laquelle peut être ajoutée avantageusement du noir de carbone à un taux minoritaire au plus égal à 15 pce, en particulier compris dans un domaine de 1 à 10 pce.

Pour coupler la charge inorganique renforçante à l'élastomère diénique, on utilise de manière bien connue un agent de couplage (ou agent de liaison) au moins bifonctionnel destiné à assurer une connexion suffisante, de nature chimique et/ou physique, entre la charge inorganique (surface de ses particules) et l'élastomère diénique. On utilise en particulier des organosilanes ou des polyorganosiloxanes au moins bifonctionnels.

On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (I) suivante:

(I) Z - A - $S_x$ - A - Z ,

dans laquelle:

- x est un entier de 2 à 8 (de préférence de 2 à 5) ;
- les symboles A, identiques ou différents, représentent un radical hydrocarboné divalent (de préférence un groupement alkylène en $C_1$-$C_{18}$ ou un groupement arylène en $C_6$-$C_{12}$, plus particulièrement un alkylène en $C_1$-$C_{10}$, notamment en $C_1$-$C_4$, en particulier le propylène) ;
- les symboles Z, identiques ou différents, répondent à l'une des trois formules ci-après:

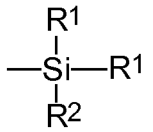 ; 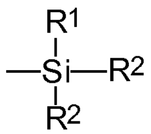 ; 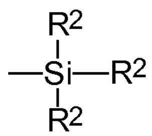 ,

dans lesquelles:

- les radicaux $R^1$, substitués ou non substitués, identiques ou différents entre eux, représentent un groupe alkyle en $C_1$-$C_{18}$, cycloalkyle en $C_5$-$C_{18}$ ou aryle en $C_6$-$C_{18}$ (de préférence des groupes alkyle en $C_1$-$C_6$, cyclohexyle ou phényle, notamment des groupes alkyle en $C_1$-$C_4$, plus particulièrement le méthyle et/ou l'éthyle).
- les radicaux $R^2$, substitués ou non substitués, identiques ou différents entre eux, représentent un groupe alkoxyle en $C_1$-$C_{18}$ ou cycloalkoxyle en $C_5$-$C_{18}$ (de préférence un groupe choisi parmi alkoxyles en $C_1$-$C_8$ et cycloalkoxyles en $C_5$-$C_8$, plus préférentiellement encore un groupe choisi parmi alkoxyles en $C_1$-$C_4$, en particulier méthoxyle et éthoxyle).

Dans le cas d'un mélange d'alkoxysilanes polysulfurés répondant à la formule (I) ci-dessus, notamment des mélanges usuels disponibles commercialement, la valeur moyenne des "x" est un nombre fractionnaire de préférence compris entre 2 et 5, plus préférentiellement proche de 4. Mais l'invention peut être aussi avantageusement mise en oeuvre par exemple avec des alkoxysilanes disulfurés (x = 2).

A titre d'exemples de silanes polysulfurés, on citera plus particulièrement les polysulfures (notamment disulfures, trisulfures ou tétrasulfures) de bis-(alkoxyl($C_1$-$C_4$)-alkyl($C_1$-$C_4$)silyl-alkyl($C_1$-$C_4$)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule $[(C_2H_5O)_3Si(CH_2)_3S_2]_2$ ou le disulfure de bis-(triéthoxysilylpropyle), en abrégé TESPD, de formule $[(C_2H_5O)_3Si(CH_2)_3S]_2$. On citera également à titre d'exemples préférentiels les polysulfures (notamment disulfures, trisulfures ou tétrasulfures) de bis-(monoalkoxyl($C_1$-$C_4$)-dialkyl($C_1$-$C_4$)silylpropyl), plus particulièrement le tétrasulfure de bis-monoéthoxydiméthylsilylpropyl tel que décrit dans la demande de brevet WO 02/083782 précitée (ou US 7 217 751).

A titre d'exemple d'agents de couplage autres qu'un alkoxysilane polysulfuré, on citera notamment des POS (polyorganosiloxanes) bifonctionnels ou encore des polysulfures d'hydroxysilane ($R^2$ = OH dans la formule I ci-dessus) tels que décrits par exemple dans les demandes de brevet WO 02/30939 (ou US 6 774 255), WO 02/31041 (ou US 2004/051210), et WO 2007/061550, ou encore des silanes ou POS porteurs de groupements fonctionnels azo-dicarbonyle, tels que décrits par exemple dans les demandes de brevet WO 2006/125532, WO 2006/125533, WO 2006/125534.

A titre d'exemples d'autres silanes sulfurés, on citera par exemple les silanes porteurs d'au moins une fonction thiol (-SH) (dits mercaptosilanes) et/ou d'au moins une fonction thiol bloqué, tels que décrits par exemple dans les brevets ou demandes de brevet US 6 849 754, WO 99/09036, WO 2006/023815, WO 2007/098080.

Bien entendu pourraient être également utilisés des mélanges des agents de couplage précédemment décrits, comme décrit notamment dans la demande WO 2006/125534 précitée.

Lorsqu'elle est renforcée par une charge inorganique telle que silice, la composition en caoutchouc du matériau de recouvrement (MR) comporte de préférence entre 2 et 15 pce, plus préférentiellement entre 3 et 12 pce d'agent de couplage.

4.3. Résine plastifiante hydrocarbonée

La composition de caoutchouc du matériau de recouvrement (MR) comporte aussi, à titre de plastifiant solide (à 23°C), plus de 25 pce, de préférence plus de 30 pce d'une résine plastifiante hydrocarbonée présentant une Tg

supérieure à +20°C, de préférence supérieure à +30°C, telle que décrite par exemple dans les demandes WO 2005/087859, WO 2006/061064 ou WO 2007/017060.

Les résines plastifiantes hydrocarbonées sont des polymères bien connus de l'homme du métier, essentiellement à base de carbone et hydrogène, miscibles par nature dans les compositions d'élastomère(s) diénique(s). Elles peuvent être aliphatiques, aromatiques ou encore du type aliphatique/aromatique c'est-à-dire à base de monomères aliphatiques et/ou aromatiques. Elles peuvent être naturelles ou synthétiques, à base ou non de pétrole (si tel est le cas, connues aussi sous le nom de résines de pétrole). Elles sont préférentiellement exclusivement hydrocarbonées, c'est-à-dire qu'elles ne comportent que des atomes de carbone et d'hydrogène.

De préférence, la résine plastifiante hydrocarbonée présente au moins une, plus préférentiellement l'ensemble, des caractéristiques suivantes :

- une Tg supérieure à 30°C (plus préférentiellement entre 40 et 100°C) ;
- une masse moléculaire moyenne en nombre (Mn) comprise entre 400 et 2000 g/mol (plus préférentiellement entre 500 et 1500 g/mol) ;
- un indice de polymolécularité (Ip) inférieur à 3, plus préférentiellement inférieur à 2 (rappel : Ip = Mw/Mn avec Mw masse moléculaire moyenne en poids).

La Tg de cette résine est mesurée de manière connue par DSC (*Differential Scanning Calorimetry*), selon la norme ASTM D3418. La macrostructure (Mw, Mn et Ip) de la résine hydrocarbonée est déterminée par chromatographie d'exclusion stérique (SEC) : solvant tétrahydrofurane ; température 35°C ; concentration 1 g/l ; débit 1 ml/min ; solution filtrée sur filtre de porosité 0,45 $\mu$m avant injection ; étalonnage de Moore avec des étalons de polystyrène ; jeu de 3 colonnes "WATERS" en série ("STYRAGEL" HR4E, HR1 et HR0.5) ; détection par réfractomètre différentiel ("WATERS 2410") et son logiciel d'exploitation associé ("WATERS EMPOWER").

Selon un mode de réalisation particulièrement préférentiel, la résine plastifiante hydrocarbonée est choisie dans le groupe constitué par les résines d'homopolymère ou copolymère de cyclopentadiène (en abrégé CPD), les résines d'homopolymère ou copolymère de dicyclopentadiène (en abrégé DCPD), les résines d'homopolymère ou copolymère de terpène, les résines d'homopolymère ou copolymère de coupe C5, les résines d'homopolymère ou copolymère de coupe C9, les résines d'homopolymère ou copolymère d'alpha-méthyl-styrène et les mélanges de ces résines. Parmi les résines de copolymères ci-dessus sont plus préférentiellement utilisées celles choisies dans le groupe constitué par les résines de copolymère (D)CPD/ vinylaromatique, les résines de copolymère (D)CPD/ terpène, les résines de copolymère (D)CPD/ coupe C5, les résines de copolymère (D)CPD/ coupe C9, les résines de copolymère terpène/ vinylaromatique, les résines de copolymère terpène/ phénol, les résines de copolymère coupe C5/ vinylaromatique, les résines de copolymère coupe C9/ vinylaromatique, et les mélanges de ces résines.

Le terme "terpène" regroupe ici de manière connue les monomères alpha-pinène, beta-pinène et limonène ; préférentiellement est utilisé un monomère limonène, composé se présentant de manière connue sous la forme de trois isomères possibles : le L-limonène (énantiomère lévogyre), le D-limonène (énantiomère dextrogyre), ou bien le dipentène, racémique des énantiomères dextrogyre et lévogyre. A titre de monomère vinylaromatique conviennent par exemple le styrène, l'alpha- méthylstyrène, l'ortho-, méta-, para-méthylstyrène, le vinyletoluène, le para-tertiobutylstyrène, les méthoxystyrènes, les chlorostyrènes, les hydroxystyrènes, le vinylmésitylène, le divinylbenzène, le vinylnaphtalène, tout monomère vinylaromatique issu d'une coupe $C_9$ (ou plus généralement d'une coupe $C_8$ à $C_{10}$). De préférence, le composé vinyle-aromatique est du styrène ou un monomère vinylaromatique issu d'une coupe $C_9$ (ou plus généralement d'une coupe $C_8$ à $C_{10}$). De préférence, le composé vinylaromatique est le monomère minoritaire, exprimé en fraction molaire, dans le copolymère considéré.

Les résines préférentielles ci-dessus sont bien connues de l'homme du métier et disponibles commercialement, par exemple vendues en ce qui concerne les :

- résines polylimonène : par la société DRT sous la dénomination "Dercolyte L120" (Mn=625 g/mol ; Mw=1010 g/mol ; Ip=1,6 ; Tg=72°C) ou par la société ARIZONA sous la dénomination "Sylvagum TR7125C" (Mn=630 g/mol; Mw=950 g/mol ; Ip=1,5 ; Tg=70°C) ;
- résines de copolymère coupe $C_5$/ vinylaromatique, notamment coupe $C_5$/ styrène ou coupe $C_5$/ coupe $C_9$ : par Neville Chemical Company sous les dénominations "Super Nevtac 78", "Super Nevtac 85" ou "Super Nevtac 99", par Goodyear Chemicals sous dénomination "Wingtack Extra", par Kolon sous dénominations "Hikorez T1095" et "Hikorez T1100", par Exxon sous dénominations "Escorez 2101" et "Escorez 1273" ;
- résines de copolymère limonène/ styrène : par DRT sous dénomination "Dercolyte TS 105" de la société DRT, par ARIZONA Chemical Company sous dénominations "ZT115LT" et "ZT5100".

A titre d'exemples d'autres résines préférentielles, on peut citer également les résines alpha-méthyl-styrène modifiées phénol. Pour caractériser ces résines modifiées phénol, on rappelle qu'il est utilisé de manière connue un

indice dit "indice hydroxyle" (mesuré selon norme ISO 4326 et exprimé en mg KOH/g). Les résines alpha-méthyl-styrène, notamment celles modifiées phénol, sont bien connues de l'homme du métier et disponibles commercialement, par exemple vendues par la société Arizona Chemical sous les dénominations "Sylvares SA 100" (Mn = 660 g/mol ; Ip = 1,5 ; Tg = 53°C) ; "Sylvares SA 120" (Mn = 1030 g/mol ; Ip = 1,9 ; Tg = 64°C) ; "Sylvares 540" (Mn = 620 g/mol ; Ip = 1,3 ; Tg = 36°C ; indice d'hydroxyle = 56 mg KOH/g) ; "Silvares 600" (Mn = 850 g/mol ; Ip = 1,4 ; Tg = 50°C ; indice d'hydroxyle = 31 mg KOH/g).

Le taux de résine hydrocarbonée est préférentiellement compris entre 25 et 100 pce, plus préférentiellement entre 30 et 80 pce.

4.4. Agent plastifiant liquide

La composition de caoutchouc du matériau de recouvrement (MR) selon l'invention a pour autre caractéristique essentielle d'être dépourvue d'agent plastifiant liquide (à 23°C) ou tout au moins d'en comporter une faible (soit 0 à moins de 20 pce) ou très faible quantité (0 à moins de 15 pce, plus préférentiellement 0 à moins de 10 pce), contrairement aux compositions de caoutchouc usuelles pour bandes de roulement de pneus hiver adaptées au roulage sur rouges enneigées ou verglacées, telles que celles qui sont utilisés pour constituer le matériau de base (MB) dans le pneu de la présente invention.

On rappellera en effet que, de manière bien connue, les compositions de caoutchouc utilisables pour constituer les bandes de roulement conventionnelles (sans matériau de recouvrement sur les parois latérales) de pneus du type hiver adaptés particulièrement à un roulage sur glace fondante, contiennent généralement plus de 30 pce, le plus souvent plus de 40 pce voire même plus de 50 pce d'un tel agent plastifiant liquide (voir par exemple WO2009/083125, WO2009/112220, WO2010/009850, WO2011/064128, WO2011/073186, WO2011/073188, WO2011/086061, WO2011/113731, WO2012/052331, WO2012/069565, WO2012/085063, WO2012/146611, WO2012/163998, WO2013/013985, WO2013/092340, WO2013/152980).

Les agents plastifiants liquides sont bien connus, leur fonction est de ramollir la matrice en diluant l'élastomère et la charge renforçante ; leur Tg est généralement inférieure à -20°C, plus généralement inférieure à -40°C.

Toute huile d'extension, qu'elle soit de nature aromatique ou non-aromatique, tout agent plastifiant liquide connu pour ses propriétés plastifiantes vis-à-vis d'élastomères diéniques, est utilisable. A température ambiante (23°C), ces plastifiants ou ces huiles, plus ou moins visqueux, sont des liquides (c'est-à-dire, pour rappel, des substances ayant la capacité de prendre à terme la forme de leur contenant), par opposition notamment aux résines plastifiantes hydrocarbonées décrites précédemment qui sont par nature solides à température ambiante.

A titre d'exemples, on citera en particulier les agents plastifiants liquides choisis dans le groupe constitué par les huiles polyoléfiniques, les huiles naphténiques, les huiles paraffiniques, les huiles DAE (*Distillate Aromatic Extracts*), les huiles MES (*Medium Extracted Solvates*), les huiles TDAE (*Treated Distillate Aromatic Extracts*), les huiles RAE (*Residual Aromatic Extracts*), les huiles TRAE (*Treated Residual Aromatic Extracts*), les huiles SRAE (*Safety Residual Aromatic Extracts*), les huiles minérales, les huiles végétales, les plastifiants éthers, les plastifiants esters, les plastifiants phosphates, les plastifiants sulfonates et les mélanges de ces composés. Selon un mode de réalisation plus particulier, l'agent plastifiant liquide est choisi dans le groupe constitué par les huiles MES, les huiles TDAE, les huiles naphténiques, les huiles végétales et les mélanges de ces huiles.

Si un agent plastifiant liquide est utilisé, ce dernier, notamment une huile de pétrole, est du type non aromatique. Un plastifiant liquide est qualifié de non aromatique dès lors qu'il présente une teneur en composés aromatiques polycycliques, déterminé avec l'extrait dans du DMSO selon la méthode IP 346, de moins de 3 % en poids, par rapport au poids total du plastifiant. A ce titre peut être utilisé préférentiellement un agent plastifiant liquide choisi dans le groupe constitué par les huiles MES, les huiles TDAE, les huiles naphténiques (à basse ou haute viscosité, notamment hydrogénées ou non), les huiles paraffiniques et les mélanges de ces huiles. Conviennent également comme huiles de pétrole, les huiles RAE, les huiles TRAE et les huiles SRAE ou les mélanges de ces huiles, qui contiennent de faibles teneurs en composés polycycliques.

A titre de plastifiants phosphates par exemple, on peut citer ceux qui contiennent entre 12 et 30 atomes de carbone, par exemple le trioctyle phosphate. A titre d'exemples de plastifiants esters, on peut citer notamment les composés choisis dans le groupe constitué par les trimellitates, les pyromellitates, les phtalates, les 1,2-cyclohexane dicarboxylates, les adipates, les azélates, les sébacates, les triesters de glycérol et les mélanges de ces composés. Parmi les triesters ci-dessus, on peut citer notamment des triesters de glycérol, de préférence constitués majoritairement (pour plus de 50 %, plus préférentiellement pour plus de 80 % en poids) d'un acide gras insaturé en $C_{18}$, c'est-à-dire choisi dans le groupe constitué par l'acide oléique, l'acide linoléique, l'acide linolénique et les mélanges de ces acides. Plus préférentiellement, qu'il soit d'origine synthétique ou naturelle (cas par exemple d'huiles végétales de tournesol ou de colza), l'acide gras utilisé est constitué pour plus de 50% en poids, plus préférentiellement encore pour plus de 80% en poids d'acide oléique. De tels triesters (trioléates) à fort taux d'acide oléique sont bien connus, ils ont été décrits par exemple dans la demande WO 02/088238, à titre d'agents plastifiants dans des bandes de roulement pour pneumatiques.

Le taux de plastifiant liquide dans la composition du matériau de recouvrement (MR) selon l'invention est de préférence compris dans un domaine de 0 à moins de 15 pce, plus préférentiellement dans un domaine de 0 à moins de 10 pce.

Comparativement, le taux de plastifiant liquide (à 23°C) dans la composition du matériau de base (MB) du pneu conforme à l'invention est un taux conventionnel pour un pneumatique de type hiver particulièrement adapté à un roulage sur sol verglacé, à savoir de préférence supérieur à 20 pce, plus préférentiellement supérieur à 30 pce, plus préférentiellement encore supérieur à 40 pce.

D'autre part, pour une performance optimale de la bande de roulement du pneu de l'invention, si un plastifiant liquide est utilisé dans la composition du matériau de recouvrement (MR), il est présent à un taux tel que le rapport pondéral charge renforçante sur agent plastifiant liquide soit supérieur à 4, plus préférentiellement supérieur à 5, en particulier supérieur à 6.

4.5. Agent d'expansion

La composition de caoutchouc du matériau de recouvrement (MR), dans le pneu à l'état cru, a pour autre caractéristique essentielle de comporter un agent d'expansion, à un taux compris entre 2 et 25 pce.

De manière connue, un agent d'expansion (« *blowing agent* » en anglais) est un composé décomposable thermiquement, destiné à libérer lors d'une activation thermique, dans le cas présent lors de la vulcanisation du pneu de l'invention, une quantité importante de gaz (par exemple azote ou dioxyde carbone) et ainsi conduire à la formation de bulles. La libération de gaz dans la composition de caoutchouc provient donc de cette décomposition thermique de l'agent d'expansion.

Il existe des agents d'expansion physiques ou chimiques, du type endothermiques ou exothermiques. On utilise préférentiellement des agents d'expansion chimiques, plus préférentiellement des agents d'expansion chimiques du type exothermiques comme par exemple des composés diazo, dinitroso, hydrazides, carbazides, semi-carbazides, tétrazoles, carbonates, citrates, tels qu'ils ont été décrits notamment dans les demandes précitées WO 2011/064128, WO 2012/163998 et WO 2013/092340.

L'agent d'expansion utilisé préférentiellement est un carbonate ou hydrogénocarbonate, en particulier un carbonate ou hydrogénocarbonate (aussi appelé bicarbonate) de sodium (Na), de potassium (K) ou d'ammonium (NH4).

Plus préférentiellement, il s'agit d'un carbonate choisi dans le groupe constitué par carbonate de sodium, hydrogénocarbonate de sodium, carbonate de potassium, hydrogénocarbonate de potassium, et les mélanges de tels carbonates (y compris, bien entendu, leurs formes hydratées). Un tel agent d'expansion a l'avantage de ne dégager que du dioxyde de carbone et de l'eau lors de sa décomposition ; il est donc particulièrement favorable à l'environnement. On utilise particulièrement l'hydrogénocarbonate ou bicarbonate de sodium ($NaHCO_3$).

Préférentiellement, le taux de cet agent d'expansion est compris entre 5 et 25 pce, plus préférentiellement entre 8 et 20 pce.

Une caractéristique préférentielle de l'invention est d'ajouter à l'agent d'expansion précédemment décrit, à titre d'activateur, un composé thermofusible dont la température de fusion est comprise entre 60°C et 220°C, de préférence entre 100°C et 200°C, plus préférentiellement entre 120°C et 180°C. Le taux de ce composé thermofusible est compris entre 2 et 25 pce, de préférence entre 2 et 20 pce, plus préférentiellement entre 2 et 15 pce. Il a pour fonction de se transformer en liquide dans le domaine de température spécifique indiqué ci-dessus, avant que ou au moment où l'agent d'expansion se décompose thermiquement et libère des bulles de gaz.

Tout composé présentant une température de fusion dans les domaines indiqués ci-dessus est susceptible de convenir. On pourra utiliser notamment les additifs de caoutchouterie connus de l'homme du métier comme étant compatibles, tant sous leur forme (par exemple sous forme de poudre) que par leur nature chimique, avec des compositions de caoutchouc usuelles pour pneus. A titre d'exemples, on peut citer notamment des polymères thermoplastiques telles que polyéthylène ou polypropylène ; de l'urée ou un dérivé thermofusible de l'urée ; de tels composés ont été décrits par exemple dans la demande précitée WO 2011/064128.

La température de fusion est une constante physique de base bien connue (disponible par exemple dans *"Handbook of Chemistry and Physics"*) des composés thermofusibles, organiques ou inorganiques ; elle pourra être contrôlée par toute méthode connue, par exemple par la méthode de Thiele, la méthode du banc de Köfler ou encore par analyse DSC.

De préférence, le composé thermofusible est un acide carboxylique, tel que décrit par exemple dans la demande précitée WO 2012/163998.

Tout acide carboxylique présentant une température de fusion comprise entre 60°C et 220°C (donc solide à 23°C), de préférence entre 100°C et 200°C, en particulier entre 120°C et 180°C, est susceptible de convenir.

En se dispersant de manière homogène dans la composition, lors de sa fusion dans le domaine de température spécifique indiqué ci-dessus, cet acide carboxylique a pour fonction d'activer chimiquement (i.e., par réaction chimique) l'agent d'expansion qui, lors de sa décomposition thermique, va ainsi libérer beaucoup plus de bulles de gaz ($CO_2$ et

$H_2O$) que s'il était utilisé seul.

Les acides carboxyliques peuvent être des monoacides, diacides ou triacides, ils peuvent être aliphatiques ou aromatiques ; ils peuvent également comporter des groupements fonctionnels supplémentaires (autres que COOH) tels que des groupes hydroxyle (OH), des groupes cétone (C=O) ou encore des groupes porteurs d'insaturation éthylénique.

Selon un mode de réalisation préférentiel, le pKa (Ka constante d'acidité) de l'acide carboxylique est supérieur à 1, plus préférentiellement compris entre 2,5 et 12, en particulier compris entre 3 et 10.

Selon un autre mode de réalisation préférentiel, combiné ou non au précédent, l'acide carboxylique comporte, le long de sa chaîne hydrocarbonée, de 2 à 22 atomes de carbone, de préférence de 4 à 20 atomes de carbone.

Les monoacides aliphatiques comportent de préférence, le long de leur chaîne hydrocarbonée, au moins 16 atomes de carbone ; on peut citer à titre d'exemples l'acide palmitique (C16), l'acide stéarique (C18), l'acide nonadécanoique (C19), l'acide béhénique (C20) et leurs différents mélanges. Les diacides aliphatiques comportent de préférence, le long de leur chaîne hydrocarbonée, de 2 à 10 atomes de carbone ; on peut citer à titre d'exemples l'acide oxalique (C2), l'acide malonique (C3), l'acide succinique (C4), l'acide glutarique (C5), l'acide adipique (C6), l'acide pimellique (C7), l'acide subérique (C8), l'acide azélaique (C9), l'acide sébacique (C10) et leurs différents mélanges. A titre de monoacide aromatique, on peut citer par exemple l'acide benzoïque. Les acides comportant des groupes fonctionnels peuvent être des monoacides, diacides ou triacides, du type aliphatiques comme aromatiques ; on peut citer à titre d'exemples l'acide tartrique, l'acide malique, l'acide maléique, l'acide glycolique, l'acide $\alpha$-cétoglutarique, l'acide salycilique, l'acide phtalique ou encore l'acide citrique.

De manière préférentielle, l'acide carboxylique est choisi dans le groupe constitué par l'acide palmitique, l'acide stéarique, l'acide nonadécanoique, l'acide béhénique, l'acide oxalique, l'acide malonique, l'acide succinique, l'acide glutarique, l'acide adipique, l'acide pimellique, l'acide subérique, l'acide azélaique, l'acide sébacique, l'acide benzoïque, l'acide tartrique, l'acide malique, l'acide maléique, l'acide glycolique, l'acide $\alpha$-cétoglutarique, l'acide salycilique, l'acide phtalique, l'acide citrique et les mélanges de ces acides.

Plus particulièrement, l'acide carboxylique est choisi dans le groupe constitué par l'acide malique, l'acide $\alpha$-cétoglutarique, l'acide citrique, l'acide stéarique et leurs mélanges. Plus préférentiellement encore, est utilisé l'acide citrique, l'acide stéarique ou un mélange de ces deux acides.

Préférentiellement, pour l'obtention d'une adhérence optimale de la bande de roulement sur la glace, la quantité totale d'agent d'expansion (en particulier de carbonate ou hydrogénocarbonate) et de composé thermofusible (en particulier d'acide carboxylique) est supérieure à 10 pce, de préférence comprise entre 10 et 40 pce. Cette quantité totale est plus préférentiellement supérieure à 15 pce, en particulier comprise entre 15 et 40 pce.

### 4.6. Additifs divers

La composition de caoutchouc du matériau de recouvrement peut comporter également tout ou partie des additifs usuels habituellement utilisés dans les compositions de caoutchouc pour bandes de roulement, comme par exemple des agents de protection tels que cires anti-ozone, anti-ozonants chimiques, anti-oxydants, des résines renforçantes, un système de réticulation à base soit de soufre, soit de donneurs de soufre et/ou de peroxyde et/ou de bismaléimides, des accélérateurs de vulcanisation, des activateurs de vulcanisation.

Elle peut également contenir des activateurs de couplage lorsque qu'un agent de couplage est utilisé, des agents de recouvrement de la charge inorganique lorsqu'une charge inorganique est utilisée, ou plus généralement des agents d'aide à la mise en oeuvre (processabilité) susceptibles de manière connue, grâce à une amélioration de la dispersion de la charge dans la matrice de caoutchouc et à un abaissement de la viscosité des compositions, d'améliorer leur processabilité à l'état cru ; ces agents sont par exemple des hydroxysilanes ou des silanes hydrolysables tels que des alkyl-alkoxysilanes, des polyols, des polyéthers, des amines, des polyorganosiloxanes hydroxylés ou hydrolysables.

### 4.7. Fabrication des compositions

Les compositions de caoutchouc du matériau de recouvrement (MR) précédemment décrites sont fabriquées dans des mélangeurs appropriés, en utilisant par exemple trois phases de préparation successives selon une procédure générale connue de l'homme du métier : une première phase de travail ou malaxage thermomécanique (parfois qualifiée de phase "non-productive") à haute température, jusqu'à une température maximale comprise entre 130°C et 200°C, de préférence entre 145°C et 185°C, suivie d'une seconde phase (non-productive) à plus basse température (de préférence inférieure à 100°C) au cours de laquelle est incorporé l'agent d'expansion, enfin une troisième phase de travail mécanique (parfois qualifiée de phase "productive") à basse température, typiquement inférieure à 120°C, par exemple entre 60°C et 100°C, phase de finition au cours de laquelle est incorporé le système de réticulation ou vulcanisation.

Un procédé utilisable pour la fabrication de telles compositions de caoutchouc comporte par exemple et de préférence les étapes suivantes :

- incorporer à l'élastomère (ou mélange d'élastomères), dans un mélangeur, au moins la charge renforçante, la résine plastifiante hydrocarbonée, le composé thermofusible, les éventuels autres additifs optionnels, en malaxant thermomécaniquement le tout, en une ou plusieurs fois, jusqu'à atteindre une température maximale comprise entre 130°C et 200°C ;
- refroidir l'ensemble à une température inférieure à 100°C ;
- puis incorporer l'agent d'expansion au mélange ainsi obtenu et refroidi, en malaxant thermomécaniquement le tout jusqu'à atteindre une température maximale inférieure à 100 C ;
- incorporer ensuite un système de réticulation ;
- malaxer le tout jusqu'à une température maximale inférieure à 120°C.

A titre d'exemple, on introduit au cours de la première phase non-productive, dans un mélangeur approprié tel qu'un mélangeur interne usuel, tous les constituants nécessaires, les éventuels agents de recouvrement ou de mise en oeuvre complémentaires et autres additifs divers, à l'exception de l'agent d'expansion et du système de réticulation. Après travail thermomécanique, tombée et refroidissement du mélange ainsi obtenu, on conduit alors une seconde phase (non-productive) de travail thermomécanique dans le même mélangeur interne, phase au cours de laquelle est incorporé l'agent d'expansion à une température plus modérée (par exemple 60°C), pour atteindre une température maximale de tombée inférieure à 100°C.

On incorpore alors le système de réticulation à basse température, généralement dans un mélangeur externe tel qu'un mélangeur à cylindres ; le tout est alors mélangé (phase productive) pendant quelques minutes, par exemple entre 5 et 15 min.

Le système de réticulation proprement dit est préférentiellement à base de soufre et d'un accélérateur primaire de vulcanisation, en particulier d'un accélérateur du type sulfénamide. A ce système de vulcanisation viennent s'ajouter, incorporés au cours de la première phase non-productive et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0,5 et 5 pce, celui de l'accélérateur primaire est de préférence compris entre 0,5 et 8 pce.

On peut utiliser comme accélérateur (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types thiurames, dithiocarbamates de zinc. Ces accélérateurs sont par exemple choisis dans le groupe constitué par disulfure de 2-mercaptobenzothiazyle (en abrégé "MBTS"), disulfure de tetrabenzylthiurame ("TBZTD"), N-cyclohexyl-2-benzothiazyle sulfénamide ("CBS"), N,N-dicyclohexyl-2-benzothiazyle sulfénamide ("DCBS"), N-ter-butyl-2-benzothiazyle sulfénamide ("TBBS"), N-ter-butyl-2-benzothiazyle sulfénimide ("TBSI"), dibenzyldithiocarbamate de zinc ("ZBEC") et les mélanges de ces composés.

Si un acide carboxylique est utilisé comme composé thermofusible, ce dernier ayant comme effet possible celui de réduire le délai d'induction (c'est-à-dire le temps nécessaire au début de la réaction de vulcanisation) lors de la cuisson de la composition, on pourra utiliser avantageusement un retardateur de vulcanisation permettant de contrecarrer ce phénomène, et d'offrir ainsi à la composition de caoutchouc le temps nécessaire pour une expansion complète avant sa vulcanisation. Le taux de ce retardateur de vulcanisation est de préférence compris entre 0,5 et 10 pce, plus préférentiellement entre 1 et 5 pce, en particulier entre 1 et 3 pce.

Les retardateurs de vulcanisation sont bien connus de l'homme du métier. On peut citer par exemple le N-cyclohexylthiophtalimide commercialisé sous la dénomination « Vulkalent G » par la société Lanxess, le N-(trichlorométhylthio)-benzène-sulfonamide commercialisé sous dénomination « Vulkalent E/C » par Lanxess, ou encore l'anhydride phtalique commercialisé sous dénomination « Vulkalent B/C » par Lanxess. De manière préférentielle, on utilise le N-cyclohexylthiophtalimide (en abrégé « CTP »).

La composition finale ainsi obtenue est ensuite calandrée par exemple sous la forme d'une feuille ou d'une plaque, notamment pour une caractérisation au laboratoire, ou encore calandrée ou extrudée sous la forme d'une bande de produit semi-fini, à l'état cru, utilisable directement pour la fabrication du pneu de l'invention.

A l'état cru (non vulcanisée) et donc non expansée, la composition de caoutchouc thermo-expansible présente une densité ou masse volumique notée $D_1$ qui est de préférence comprise entre 1,100 et 1,400 g/cm$^3$, plus préférentiellement comprise dans un domaine de 1,150 à 1,350 g/cm$^3$.

La vulcanisation (ou cuisson) est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

C'est au cours de cette étape de vulcanisation que l'agent d'expansion va libérer une quantité de gaz importante, conduire à la formation de bulles dans la composition de caoutchouc du matériau de recouvrement (MR) et finalement à l'expansion ce de dernier sous forme de caoutchouc mousse.

Dans le pneu à l'état cuit, la densité notée $D_2$ de cette composition de caoutchouc une fois expansée (i.e., à

l'état de caoutchouc mousse) est comprise de préférence entre 0,700 à 1,000 g/cm$^3$, plus préférentiellement comprise dans un domaine de 0,750 à 0,950 g/cm$^3$.

Son taux d'expansion volumique noté $T_E$ (exprimé en %) est de préférence compris entre 25% et 75%, plus préférentiellement dans un domaine de 30 à 60%, ce taux d'expansion $T_E$ étant calculé de manière connue à partir des densités $D_1$ et $D_2$ ci-dessus, comme suit :

$$T_E = [(D_1/D_2) - 1] \times 100.$$

D'autre part, pour une adhérence optimale sur sol enneigé, on a de préférence au moins une, plus préférentiellement les deux caractéristiques suivantes qui sont vérifiées sur la composition de caoutchouc du matériau de recouvrement (MR) à l'état vulcanisé :

- le module dynamique de cisaillement G* de la composition de caoutchouc, soumise à une contrainte maximale alternée de 0,7 MPa, à une fréquence de 10 Hz et à une température égale à -10°C, est supérieur à 200 MPa, plus préférentiellement supérieur à 400 MPa, en particulier entre 400 et 1200 MPa ;
- le module sécant en extension de la composition de caoutchouc, soumise à une élongation de 3% et à une température de -10°C, est supérieur à 200 MPa, plus préférentiellement supérieur à 400 MPa, en particulier compris entre 400 et 1200 MPa.

Comparativement, on a de préférence au moins une, plus préférentiellement les deux caractéristiques suivantes qui sont vérifiées sur la composition de caoutchouc du matériau de base (MB) à l'état vulcanisé :

- le module dynamique de cisaillement G* de la composition de caoutchouc, soumise à une contrainte maximale alternée de 0,7 MPa, à une fréquence de 10 Hz et à une température égale à -10°C, est inférieur à 20 MPa, plus préférentiellement inférieur à 10 MPa, en particulier inférieur à 5 MPa ;
- le module sécant en extension (noté E3) de la composition de caoutchouc, soumise à une élongation de 3% et à une température de -10°C, est inférieur à 20 MPa, plus préférentiellement inférieur à 10 MPa, en particulier inférieur à 5 MPa.

Pour la mesure du module dynamique de cisaillement G* et la mesure du module sécant en extension, on procède comme décrit ci-après.

Pour rappel, les termes «module élastique G' » et «module visqueux G" » désignent des propriétés dynamiques bien connues de la personne du métier. Ces propriétés sont mesurées sur un viscosité-analyseur de type « Metravib VA4000 » sur des éprouvettes moulées à partir de compositions crues. Des éprouvettes telles que celles décrites dans la norme ASTM D 5992-96 (version publiée en septembre 2006, initialement approuvée en 1996) à la figure X2.1 (mode de réalisation circulaire) sont utilisées. Le diamètre « d » de l'éprouvette est de 10 mm (elle a donc une section circulaire de 78,5 mm$^2$), l'épaisseur « L » de chacune des portions de composition caoutchouteuse est de 2 mm, ce qui donne un ratio d/L de 5 (contrairement à la norme ISO 2856, mentionnée dans la norme ASTM, paragraphe X2.4, qui préconise une valeur d/L de 2).

On enregistre la réponse d'un échantillon de composition caoutchouteuse vulcanisée soumis à une sollicitation sinusoïdale en cisaillement simple alterné, à la fréquence de 10 Hz. L'éprouvette est sollicitée en cisaillement sinusoïdal à 10 Hz, à contrainte imposée (0,7 MPa), symétriquement autour de sa position d'équilibre. Une accommodation de l'éprouvette est réalisée préalablement à la mesure. L'éprouvette est alors sollicitée en cisaillement sinusoïdal à 10Hz, à 100% de déformation crête-crête, à température ambiante (23°C).

La mesure est réalisée au cours d'une rampe de température croissante de 1,5°C par minute, depuis une température Tmin inférieure à la Tg du matériau, jusqu'à une température Tmax qui peut correspondre au plateau caoutchoutique du matériau. Avant de commencer le balayage, on stabilise l'échantillon à la température Tmin pendant 20 min pour avoir une température homogène au sein de l'échantillon. Le résultat exploité est le module élastique de cisaillement dynamique (G') et le module visqueux de cisaillement (G") aux températures choisies.

Le « module complexe » G* se définit comme la valeur absolue de la somme complexe des modules élastique G' et visqueux G" :

$$G^* = \sqrt{(G'^2 + G''^2}$$

Les propriétés en traction sont mesurées selon la norme ASTM D 412 de 1998 (éprouvette "C") ; on mesure en seconde élongation (i.e., après un cycle d'accommodation) le module sécant vrai c'est-à-dire ramené à la section

réelle de l’éprouvette à 3%, noté E3 et exprimé en MPa (conditions normales de température et d’hygrométrie selon la norme ASTM D 1349 de 1999).

4.8. Fabrication du pneu de l’invention - Exemples de réalisation

La première étape de la fabrication d’une bande de roulement d’un pneu selon l’invention dont le matériau de base (MB) est recouvert pas sa couche de matériau de recouvrement (MR), est de préparer ladite couche de recouvrement.

On peut procéder par exemple, sans bien sûr que ce mode de réalisation particulier soit limitatif, comme décrit préférentiellement dans la demande précitée WO 2013/087878, à savoir en imprégnant un assemblage bidimensionnel de fibres tel un tissu ou un intissé, ou un assemblage tridimensionnel de fibres tel un feutre, préalablement mis aux dimensions appropriées, par la composition de caoutchouc du matériau de recouvrement (MR). Cette imprégnation peut se faire par exemple par calandrage à chaud, par moulage sous presse ou encore par injection sous pression.

La présence de cet assemblage de fibres, imprégné par la composition de caoutchouc de la couche du matériau de recouvrement (MR), permet d’obtenir une excellente cohésion de la couche du matériau de recouvrement (MR) avant la vulcanisation du pneu et facilite ainsi la mise en place, lors du moulage du pneu, de cette couche du matériau de recouvrement (MR) sur le matériau de base (MB).

Des moyens autres qu’un assemblage de fibres pourraient bien entendu être utilisés pour améliorer la cohésion et la mise en place de la couche du matériau de recouvrement (MR) à l’état cru, par exemple un feuillard rigide en métal, en fibres de cellulose (e.g. papier, carton) ou autre polymère.

Bien entendu, si un tel assemblage de fibres ou feuillard ou autre moyen, est utilisé pour faciliter la pose de la composition de caoutchouc du matériau de recouvrement (MR) sur le matériau de base (MB), lors de la fabrication du pneu de l’invention, on comprend bien que le matériau de recouvrement (MR) dans le pneu de l’invention peut comporter alors, en plus de la composition de caoutchouc elle-même décrite en détail précédemment, cet assemblage de fibres ou feuillard ou autre moyen, sauf si ce dernier (assemblage de fibres ou feuillard ou autre moyen) est extrait avant la cuisson du pneumatique.

De préférence, les fibres utilisées sont des fibres longues, dont la plus grande dimension est supérieure à 30 mm, plus préférentiellement supérieure à 50 mm. Tout type de fibres, notamment fibres textiles ou minérales, peut être utilisé pour donner à la couche du matériau de recouvrement (MR) une rigidité d’extension suffisante pour faciliter la mise en place de cette couche de recouvrement dans les découpures de la sculpture de la bande de roulement. Parmi les fibres textiles, on peut citer les fibres textiles naturelles telles que les fibres en cellulose, coton, laine, ou les fibres textiles synthétiques, par exemple les fibres de polyester, polyamide, carbone, aramide, polyéthylène, polypropylène, polyacrylonitrile, polyimide, polysulfones, polyéther sulfones, polyuréthannes, d’alcool polyvinylique et leurs mélanges. Parmi les fibres minérales, on peut citer les fibres de verre et de basalte.

Puis, un moyen d’obtention d’une sculpture de bande de roulement selon l’invention consiste par exemple à recouvrir une ébauche crue (partie non sculptée destinée à être vulcanisée dans un moule pour obtenir le pneu) de bande de roulement fabriquée dans un mélange de base (MB), avec une couche du matériau de recouvrement (MR) d’épaisseur appropriée, avant de procéder au moulage de la bande de roulement et de ses rainures et incisions. Après moulage, le mélange de recouvrement (MR) se trouvant sur les faces de contact (2) peut être laissé en place ou bien éliminé par un moyen mécanique (notamment par un meulage).

Un autre mode de réalisation industrielle d’une bande de roulement selon l’invention, peut consister à déposer, sur l’ébauche de pneu non vulcanisé pourvue d’une bande de roulement en mélange de base non vulcanisé, des bandelettes de matériau de recouvrement, comme cela est décrit dans le document EP 0510550 (les bandelettes pouvant être déposées dans la direction circonférentielle et/ou transversale sur la bande de roulement). Une autre manière peut consister encore à réaliser la bande de roulement par co-extrusion de deux mélanges (ou plus) au moment de l’extrusion de la bande de roulement. On peut encore opérer comme expliqué dans la demande WO 2013/087878 aux figures 5-6 et paragraphe IV-B.

Après vulcanisation du pneu de l’invention, la couche de matériau de recouvrement spécifique précédemment décrite a l’avantage de procurer une très forte rigidité à basse température (en dessous de 0°C) aux arêtes (23, 24, 25, 26) formées par l’intersection des faces de contact (2) et des parois latérales (13, 14, 15, 16), forte rigidité qui est particulièrement favorable au comportement du pneu sur un sol enneigé, tout en offrant à ce pneu, grâce à la présence du caoutchouc mousse apte à générer une microrugosité de surface particulièrement significative, une adhérence améliorée dans des conditions de roulage sur glace fondante.

Des tests de friction sur glace fondante (-2°C) ont été conduits au laboratoire dont le principe repose sur un patin de bande de roulement (comportant 4 blocs 1) glissant à une vitesse donnée (par exemple égale à 5 km/h) sur une piste de glace (température de la glace fixée à - 2 C) avec une charge imposée (par exemple égale à 3 kg/cm$^2$). On mesure les forces générées dans le sens de l’avancement (Fx) du patin et perpendiculaire à l’avancement (Fz) ; le rapport Fx/Fz détermine le coefficient de friction de l’éprouvette sur la glace. Le principe de ce test est bien connu de

l'homme du métier (voir par exemple les demandes précitées WO2011/086061, WO2011/113731, WO2012/052331, WO2012/085063, WO2012/163998, WO2013/152980). Il permet d'évaluer, dans des conditions représentatives, l'adhérence sur glace fondante qui serait obtenue lors d'un essai de roulage sur un véhicule.

Plus précisément, les éprouvettes utilisées étaient telles que présentées aux figures 3 (vue de dessus) et 4 (vue de côté) annexées :

- l'éprouvette (ici référencée 30) est constituée de quatre blocs (31) de mélange caoutchouteux moulés sur un support caoutchouteux (34) parallélépipédique (de longueur L = 60 mm, de largeur 1-= 56 mm et d'épaisseur 2 mm) ;
- les blocs de largeur $L_1$ égale à 25 mm et de longueur $L_2$ égale à 27 mm, sont séparés par une rainure longitudinale 3 et une rainure transversale 4, toutes deux de l'ordre de 6 mm de large. Chaque bloc 31 comporte quatre incisions 33 d'orientation axiale Y débouchant de part et d'autre du bloc, chacune de 0,6 mm d'épaisseur, qui séparent le bloc 31 en cinq parties égales 32. La hauteur des blocs est de 9 mm. Le déplacement de l'éprouvette est effectué dans la direction longitudinale X, normale à l'orientation axiale Y des incisions.

Ces tests ont révélé que l'utilisation d'une composition de caoutchouc selon l'invention (à base essentiellement de 100 pce de SBR (44% de styrène) à haute Tg égale à environ -12°C, 100 pce de silice, 40 pce de résine (DCPD) à haute Tg égale à environ 52°C, de 10 pce de NaHCO3 et 8 pce d'acide citrique, et dépourvue d'agent plastifiant liquide, en lieu et place d'une composition de caoutchouc de matériau de recouvrement (MR) connue (selon WO2013/087878 précitée), conduisait à une amélioration très significative d'adhérence sur la glace (augmentation de près de 30% du coefficient de friction).

En conclusion, l'invention ici décrite permet d'améliorer notablement le compromis d'adhérence sur sol enneigé et d'adhérence sur glace fondante.

## Revendications

1. Pneu, à l'état cru ou cuit, dont la bande de roulement comporte :

   - une pluralité d'éléments de sculpture (1) formés d'un premier matériau caoutchouteux dit matériau de base (MB), délimités par des découpures (3, 4) ;
   - ces éléments de sculpture comprenant une face de contact (2) destinée à venir en contact avec la chaussée pendant le roulage du pneu, et au moins une paroi latérale (13, 14, 15, 16) ;
   - sur au moins une paroi latérale de tout ou partie desdits éléments de sculpture, le matériau de base étant recouvert au moins en partie par une couche d'un second matériau caoutchouteux dit matériau de recouvrement (MR), différent du matériau de base, qui comporte au moins une composition de caoutchouc,

   **caractérisé en ce que** ladite composition de caoutchouc du matériau de recouvrement est thermo-expansible et comporte entre 2 et 25 pce d'un agent d'expansion, dans le pneu à l'état cru, sous forme de caoutchouc mousse dans le pneu à l'état cuit, et **en ce qu'**elle comporte, dans le pneu à l'état cru comme à l'état cuit, au moins :

   - 50 à 100 pce d'un copolymère à base d'unités styréniques et d'unités butadiéniques, dont la température de transition vitreuse est supérieure à -40°C ;
   - optionnellement, 0 à 50 pce d'un autre élastomère diénique ;
   - plus de 50 pce d'une charge renforçante ;
   - plus de 25 pce d'une résine plastifiante hydrocarbonée dont la température de transition vitreuse est supérieure à 20°C ;
   - optionnellement, 0 à moins de 20 pce d'un agent plastifiant liquide.

2. Pneu selon la revendication 1, dans lequel le taux de copolymère à base d'unités styréniques et butadiéniques est compris dans un domaine de 70 à 100 pce, de préférence de 80 à 100 pce.

3. Pneu selon les revendications 1 ou 2, dans lequel le copolymère à base d'unités styréniques et butadiéniques est choisi dans le groupe constitué par les copolymères styrène-butadiène, les copolymères styrène-butadiène-isoprène et les mélanges de tels copolymères, de préférence est un copolymère styrène-butadiène.

4. Pneu selon l'une quelconque des revendications 1 à 3, dans lequel le copolymère à base d'unités styréniques et butadiéniques présente une température de transition vitreuse qui est comprise dans un domaine de -30°C à +30°C.

**5.** Pneu selon l'une quelconque des revendications 1 à 4, dans lequel l'autre élastomère diénique est choisi dans le groupe constitué par le caoutchouc naturel, les polyisoprènes de synthèse, les polybutadiènes, les copolymères de butadiène, les copolymères d'isoprène et les mélanges de ces élastomères.

**6.** Pneu selon l'une quelconque des revendications 1 à 5, dans lequel le taux de charge renforçante est compris entre 50 et 150 pce, de préférence compris dans un domaine de 60 à 140 pce.

**7.** Pneu selon l'une quelconque des revendications 1 à 6, dans lequel le taux de résine plastifiante hydrocarbonée est compris entre 25 et 100 pce, de préférence entre 30 et 80 pce.

**8.** Pneu selon l'une quelconque des revendications 1 à 7, dans lequel le taux d'agent plastifiant liquide optionnel étant compris dans un domaine de 0 à moins de 15 pce, de préférence de 0 à moins de 10 pce.

**9.** Pneu selon l'une quelconque des revendications 1 à 8, dans lequel l'agent d'expansion est un carbonate ou hydrogénocarbonate, de préférence est choisi dans le groupe constitué par carbonate de sodium, hydrogénocarbonate de sodium, carbonate de potassium, hydrogénocarbonate de potassium, et les mélanges de tels carbonates.

**10.** Pneu selon l'une quelconque des revendications 1 à 9, dans lequel le taux d'agent d'expansion est compris entre 5 et 25 pce, de préférence entre 8 et 20 pce.

**11.** Pneu selon l'une quelconque des revendications 1 à 10, dans lequel la composition de caoutchouc du matériau de recouvrement comporte en outre entre 2 et 25 pce d'un composé thermofusible dont la température de fusion est comprise entre 60°C et 220°C, de préférence entre 100°C et 200°C.

**12.** Pneu selon la revendication 11, dans lequel le composé thermofusible est un acide carboxylique, de préférence est choisi dans le groupe constitué par l'acide malique, l'acide acétoglutarique, l'acide citrique, l'acide stéarique et les mélanges de ces acides.

**13.** Pneu selon les revendications 11 ou 12, dans lequel le taux de composé thermofusible est compris entre 2 et 20 pce, de préférence entre 2 et 15 pce.

**14.** Pneu selon l'une quelconque des revendications 1 à 13, dans lequel l'épaisseur (E1) de la couche de matériau de recouvrement (MR) est supérieure à 0,1 mm, de préférence comprise entre 0,2 et 4,0 mm.

## Patentansprüche

**1.** Reifen in ungehärtetem oder gehärtetem Zustand, dessen Lauffläche aufweist:

- eine Vielzahl von Profilmustern (1), gebildet aus einem ersten Gummimaterial, bezeichnet als Basismaterial (MB), begrenzt durch Ausschnitte (3, 4);
- wobei diese Profilmuster eine Kontaktfläche (2) umfassen, die bestimmt ist, während des Fahrens des Reifens mit der Straße in Kontakt zu kommen, und mindestens eine Seitenwand (13, 14, 15, 16);
- wobei auf mindestens einer Seitenwand aller oder von einigen der Profilmuster das Basismaterial mindestens teilweise von einer Schicht eines zweiten Gummimaterials, bezeichnet als Abdeckmaterial (MR), bedeckt ist, das sich von dem Basismaterial unterscheidet, das mindestens eine Gummizusammensetzung aufweist,

**dadurch gekennzeichnet, dass** die Gummizusammensetzung des Abdeckmaterials wärmeexpandierbar ist und zwischen 2 und 25 phe eines Expansionsmittels im Reifen in ungehärtetem Zustand in Form von Schaumgummi im Reifen in gehärtetem Zustand aufweist und dadurch, dass sie im Reifen in ungehärtetem Zustand wie in gehärtetem Zustand mindestens aufweist:

- 50 bis 100 phe eines Copolymers auf der Basis von Styroleinheiten und von Butadieneinheiten, dessen Glasübergangstemperatur über -40 °C beträgt;
- optional 0 bis 50 phe eines anderen Dienelastomers;
- über 50 phe eines Verstärkungsfüllstoffs;
- über 25 phe eines weichmachenden Kohlenwasserstoffharzes, dessen Glasübergangstemperatur über 20 °C beträgt;

- optional 0 bis unter 20 phe eines flüssigen Weichmachers.

2. Reifen nach Anspruch 1, wobei der Copolymergehalt auf der Basis von Styrol- und Butadieneinheiten in einem Bereich von 70 bis 100 phe, vorzugsweise von 80 bis 100 phe, liegt.

3. Reifen nach den Ansprüchen 1 oder 2, wobei das Copolymer auf der Basis von Styrol- und Butadieneinheiten aus der Gruppe ausgewählt ist, die von den Styrol-Butadien-Copolymeren, den Styrol-Butadien-Isopren-Copolymeren und den Gemischen derartiger Copolymere gebildet ist, und vorzugsweise ein Styrol-Butadien-Copolymer ist.

4. Reifen nach einem der Ansprüche 1 bis 3, wobei das Copolymer auf der Basis von Styrol- und Butadieneinheiten eine Glasübergangstemperatur aufweist, die in einem Bereich von -30 °C bis +30 °C liegt.

5. Reifen nach einem der Ansprüche 1 bis 4, wobei das andere Dienelastomer aus der Gruppe ausgewählt ist, die von dem Naturkautschuk, den synthetischen Polyisoprenen, den Polybutadienen, den Butadien-Copolymeren, den Isopren-Copolymeren und den Gemischen dieser Elastomere gebildet ist.

6. Reifen nach einem der Ansprüche 1 bis 5, wobei der Gehalt an Verstärkungsfüllstoff zwischen 50 und 150 phe, vorzugsweise in einem Bereich von 60 bis 140 phe, liegt.

7. Reifen nach einem der Ansprüche 1 bis 6, wobei der Gehalt an weichmachendem Kohlenwasserstoffharz zwischen 25 und 100 phe, vorzugsweise zwischen 30 und 80 phe, liegt.

8. Reifen nach einem der Ansprüche 1 bis 7, wobei der Gehalt an flüssigem Weichmacher optional in einem Bereich von 0 bis unter 15 phe, vorzugsweise von 0 bis unter 10 phe, liegt.

9. Reifen nach einem der Ansprüche 1 bis 8, wobei das Expansionsmittel ein Carbonat oder Hydrogencarbonat ist und vorzugsweise aus der Gruppe ausgewählt ist, die von Natriumcarbonat, Natriumhydrogencarbonat, Kaliumcarbonat, Kaliumhydrogencarbonat und den Gemischen derartiger Carbonate gebildet ist.

10. Reifen nach einem der Ansprüche 1 bis 9, wobei der Gehalt an Expansionsmittel zwischen 5 und 25 phe, vorzugsweise zwischen 8 und 20 phe, liegt.

11. Reifen nach einem der Ansprüche 1 bis 10, wobei die Gummizusammensetzung des Abdeckmaterials ferner zwischen 2 und 25 phe einer wärmeschmelzbaren Verbindung aufweist, deren Schmelztemperatur zwischen 60 °C und 220 °C, vorzugsweise zwischen 100 °C und 200 °C, liegt.

12. Reifen nach Anspruch 11, wobei die wärmeschmelzbare Verbindung eine Carbonsäure ist und vorzugsweise aus der Gruppe ausgewählt ist, die von der Apfelsäure, der $\alpha$-Ketoglutarsäure, der Citronensäure, der Stearinsäure und den Gemischen dieser Säuren gebildet ist.

13. Reifen nach den Ansprüchen 11 oder 12, wobei der Gehalt an wärmeschmelzbarer Verbindung zwischen 2 und 20 phe, vorzugsweise zwischen 2 und 15 phe, liegt.

14. Reifen nach einem der Ansprüche 1 bis 13, wobei die Stärke (E1) der Abdeckmaterialschicht (MR) über 0,1 mm, vorzugsweise zwischen 0,2 und 4,0 mm, beträgt.

**Claims**

1. Tyre, in the uncured or cured state, of which the tread comprises:

   - a plurality of tread pattern features (1) formed from a first rubber material referred to as base material (MB), defined by cut-outs (3, 4);
   - these tread pattern features comprising a contact surface (2) intended to come into contact with the road while the tyre is rolling, and at least one sidewall (13, 14, 15, 16);
   - on at least one sidewall of all or a portion of said tread pattern features, the base material being covered at least partially by a layer of a second rubber material referred to as coating material (MR), different from the base material, that comprises at least one rubber composition,

**characterised in that** said rubber composition of the coating material is heat-expandable and comprises between 2 and 25 phr of a blowing agent, in the tyre in the uncured state, in the form of foam rubber in the tyre in the cured state, and **in that** it comprises, in the tyre in the uncured state as in the cured state, at least:

- 50 to 100 phr of a styrene unit and butadiene unit copolymer, of which the glass transition temperature is greater than -40°C;
- optionally, 0 to 50 phr of another diene elastomer;
- more than 50 phr of a reinforcing filler;
- more than 25 phr of a hydrocarbon plastifying resin of which the glass transition temperature is greater than 20°C;
- optionally, 0 to less than 20 phr of a liquid plastifying agent.

**2.** Tyre according to claim 1, wherein the content of styrene unit and butadiene unit copolymer is within a range from 70 to 100 phr, preferably from 80 to 100 phr.

**3.** Tyre according to claims 1 or 2, wherein the styrene unit and butadiene unit copolymer is chosen from the group comprising styrene-butadiene copolymers, styrene-butadiene-isoprene copolymers and mixtures of such copolymers, preferably is a styrene-butadiene copolymer.

**4.** Tyre according to any of claims 1 to 3, wherein the styrene unit and butadiene unit copolymer has a glass transition temperature that is within a range from -30°C to +30°C.

**5.** Tyre according to any of claims 1 to 4, wherein the other diene elastomer is chosen from the group comprising natural rubber, synthetic polyisoprenes, polybutadienes, butadiene copolymers, isoprene copolymers and mixtures of these elastomers.

**6.** Tyre according to any of claims 1 to 5, wherein the content of reinforcing filler is between 50 and 150 phr, preferably within a range from 60 to 140 phr.

**7.** Tyre according to any of claims 1 to 6, wherein the content of hydrocarbon plastifying resin is between 25 and 100 phr, preferably between 30 and 80 phr.

**8.** Tyre according to any of claims 1 to 7, wherein the content of optional liquid plastifying agent is within a range from 0 to less than 15 phr, preferably from 0 to less than 10 phr.

**9.** Tyre according to any of claims 1 to 8, wherein the blowing agent is a carbonate or hydrogencarbonate, preferably is chosen from the group comprising sodium carbonate, sodium hydrogencarbonate, potassium carbonate, potassium hydrogencarbonate, and mixtures of such carbonates.

**10.** Tyre according to any of claims 1 to 9, wherein the content of blowing agent is between 5 and 25 phr, preferably between 8 and 20 phr.

**11.** Tyre according to any of claims 1 to 10, wherein the rubber composition of the coating material further comprises between 2 and 25 phr of a thermofusible compound of which the melting temperature is between 60°C and 220°C, preferably between 100°C and 200°C.

**12.** Tyre according to claim 11, wherein the thermofusible compound is a carboxylic acid, preferably is chosen from the group comprising malic acid, acetoglutaric acid, citric acid, stearic acid and mixtures of these acids.

**13.** Tyre according to claims 11 or 12, wherein the content of thermofusible compound is between 2 and 20 phr, preferably between 2 and 15 phr.

**14.** Tyre according to any of claims 1 to 13, wherein the thickness (E1) of the layer of coating material (MR) is greater than 0.1 mm, preferably between 0.2 and 4.0 mm.

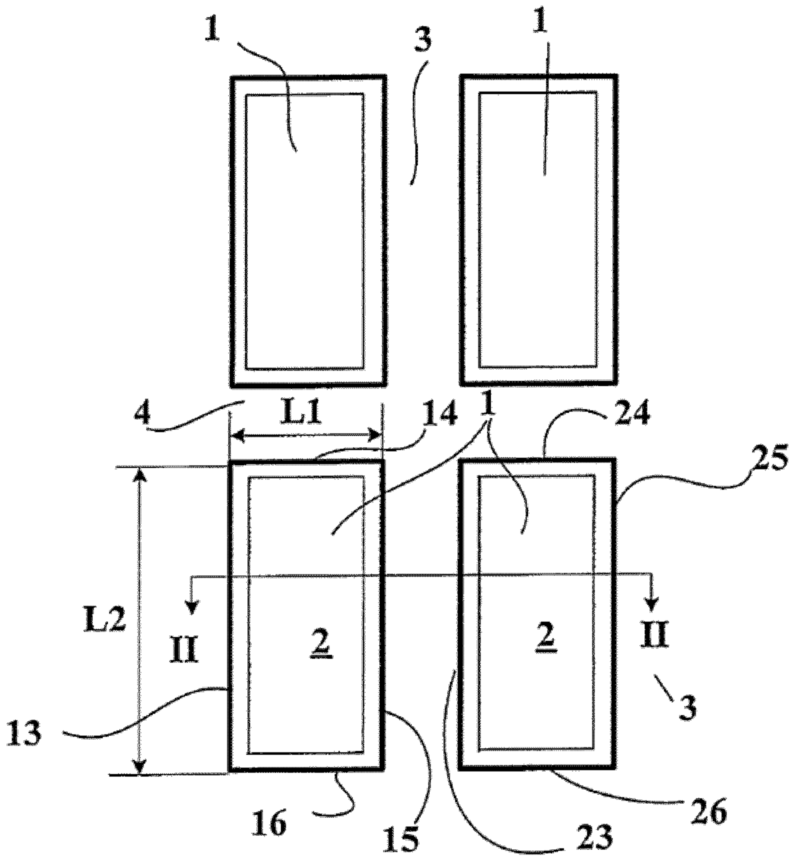


FIG. 1

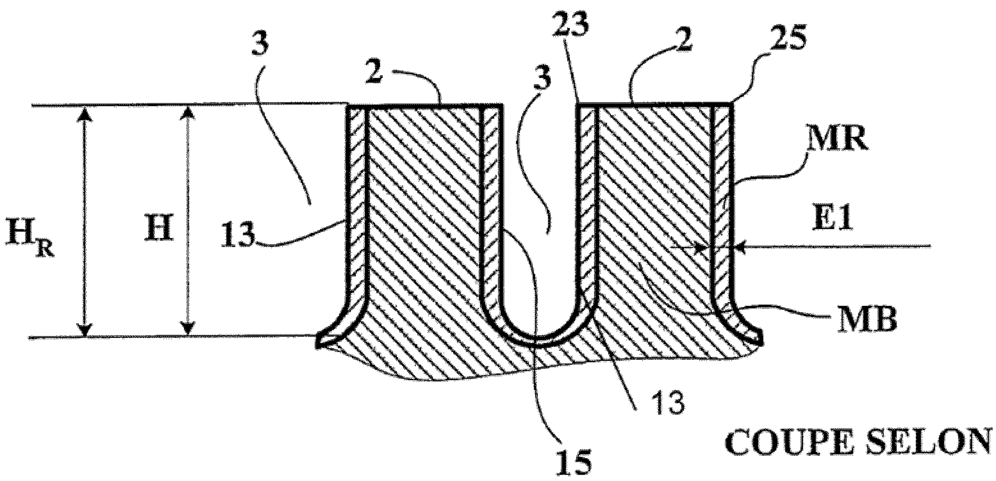


COUPE SELON II-II

FIG. 2

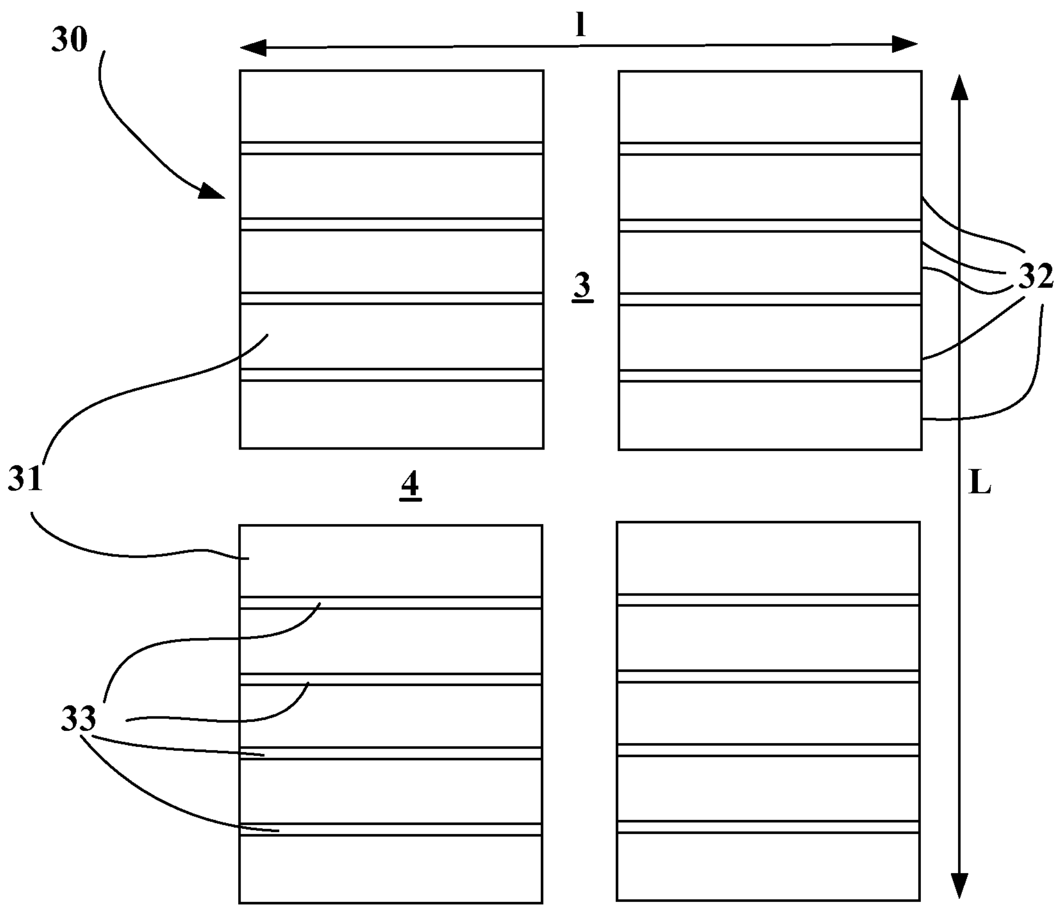


Fig. 3

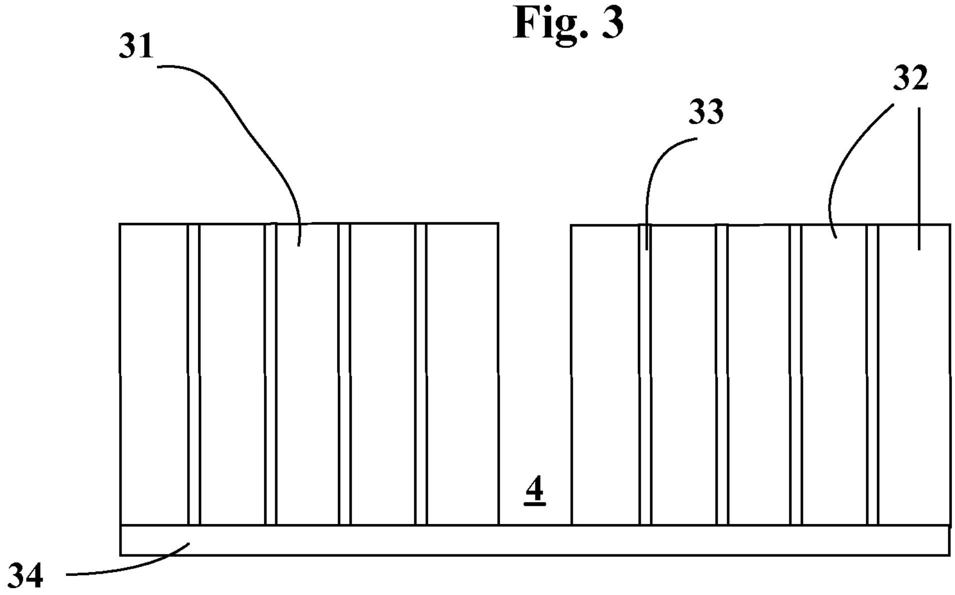


Fig. 4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2013087878 A
- WO 9736724 A
- WO 9916600 A
- WO 2006069792 A
- WO 2006069793 A
- WO 2008003434 A
- WO 2008003435 A
- WO 0316837 A
- WO 03002648 A
- US 2005016651 A
- WO 03002649 A
- US 2005016650 A
- WO 02083782 A
- US 7217751 B
- WO 0230939 A
- US 6774255 B
- WO 0231041 A
- US 2004051210 A
- WO 2007061550 A
- WO 2006125532 A
- WO 2006125533 A
- WO 2006125534 A
- US 6849754 B
- WO 9909036 A
- WO 2006023815 A
- WO 2007098080 A
- WO 2005087859 A
- WO 2006061064 A
- WO 2007017060 A
- WO 2009083125 A
- WO 2009112220 A
- WO 2010009850 A
- WO 2011064128 A
- WO 2011073186 A
- WO 2011073188 A
- WO 2011086061 A
- WO 2011113731 A
- WO 2012052331 A
- WO 2012069565 A
- WO 2012085063 A
- WO 2012146611 A
- WO 2012163998 A
- WO 2013013985 A
- WO 2013092340 A
- WO 2013152980 A
- WO 02088238 A
- EP 0510550 A